# EUROPÄISCHE PATENTSCHRIFT

(11) **EP 1 821 080 B1**
(45) Veröffentlichungstag und Bekanntmachung des Hinweises auf die Patenterteilung: **07.07.2010**
(21) Anmeldenummer: 07001526.8
(22) Anmeldetag: 24.01.2007
(51) Int. Cl.: G01F 23/24, G01F 23/22

(54) **Füllstandssensor und zugehöriges Betriebs-und Herstellungsverfahren sowie entsprechende Verwendung**
Fill level sensor and associated operation and production method and corresponding use
Capteur du niveau de remplissage et procédés de fonctionnement et de fabrication correspondants tout comme utilisation cor

(30) Priorität: 20.02.2006 DE 102006007801
(43) Veröffentlichungstag der Anmeldung: 22.08.2007
(73) Patentinhaber: Isabellenhütte Heusler GmbH & Co.KG, 35683 Dillenburg (DE)
(72) Erfinder: Hetzler, Ullrich, 35688 Dillenburg-Oberscheid (DE)
(74) Vertreter: Beier, Ralph

(56) Entgegenhaltungen:
- DE-A1- 3 802 225
- DE-A1- 4 434 646
- DE-A1- 10 232 821
- DE-A1- 10 237 946
- DE-C1- 10 038 792
- FR-A- 1 401 676

## Beschreibung

Die Erfindung betrifft einen Füllstandssensor zur Messung eines Füllstands einer Flüssigkeit, insbesondere zur Erfassung des Füllstands eines Kraftstoffs in einem Kraftstofftank eines Kraftfahrzeugs.

Weiterhin betrifft die Erfindung ein Betriebsverfahren und ein Herstellungsverfahren für einen solchen Füllstandssensor.

Ferner betrifft die Erfindung auch die neuartige Verwendung einer aus mehreren Thermoelementen bestehenden Thermosäule ohne eine zusätzliche Heizung als Füllstandssensor.

Von verschiedenen Herstellern sind Füllstandssensoren auf Thermoelementbasis bekannt, die beispielsweise eingesetzt werden können, um den Füllstand des Kraftstoffs in einem Kraftstofftank eines Kraftfahrzeuges zu messen. Diese bekannten Füllstandssensoren auf Thermoelementbasis weisen eine Vielzahl von Thermoelementen auf, die elektrisch in Reihe geschaltet sind und eine langgestreckte, streifenförmige Thermosäule bilden, wobei die heißen Kontaktstellen in einer Reihe übereinander auf der einen Seite der Thermosäule angeordnet sind, während die kalten Kontaktstellen der Thermoelemente ebenfalls in einer Reihe auf der gegenüberliegenden Seite der Thermosäule angeordnet sind. Die einzelnen Thermoelemente sind hierbei auf ein Trägermaterial aufgebracht, wobei es sich beispielsweise um eine Kunststoff-Folie (z.B. Kapton) handeln kann. Darüber hinaus weisen die bekannten Füllstandssensoren auf Thermoelementbasis einen Heizleiter auf, der sich neben der Reihe von heißen Kontaktstellen der Thermoelemente erstreckt und eine elektrische Erhitzung der heißen Kontaktstellen ermöglicht. Bei einer Bestromung des Heizleiters erwärmen sich die Thermoelemente unterhalb und oberhalb des Flüssigkeitsspiegels unterschiedlich.

So führt die Erhitzung durch den Heizleiter bei den in die Flüssigkeit eingetauchten Thermoelementen nur zu einer relativ geringen Temperaturdifferenz zwischen den heißen und kalten Kontaktstellen, da die von dem Heizleiter erzeugte Wärme dort über die gut wärmeleitfähige Flüssigkeit weitestgehend abgeführt wird.

Bei den Thermoelementen, die sich oberhalb des Flüssigkeitsspiegels befinden, wird dagegen nur ein geringer Teil der von dem Heizleiter erzeugten Wärme abgeführt, was zu einer entsprechend größeren Temperaturdifferenz zwischen den heißen und kalten Kontaktstellen führt.

Die bekannten Füllstandssensoren auf Thermoelementbasis erzeugen also im vollständig eingetauchten Zustand, d.h. bei vollem Tank, eine minimale Thermospannung, wohingegen die erzeugte Thermospannung bei leerem Tank maximal ist. Aus der von dem Füllstandssensor erzeugten elektrischen Spannung lässt sich deshalb in einfacher Weise der Füllstand berechnen.

Besonders vorteilhaft an diesen Füllstandssensoren auf Thermoelementbasis ist die automatische Kompensation von Schwankungen der Umgebungstemperatur, da die einzelnen Thermoelemente jeweils nur die Differenztemperatur zwischen kalter und warmer Kontaktstelle messen, so dass eine Änderung der Umgebungstemperatur in gleicher Weise auf die heißen und kalten Kontaktstellen wirkt und deshalb messtechnisch keinen Einfluss hat.

Nachteilig an diesen Füllstandssensoren auf Thermoelementbasis ist dagegen der komplexe Aufbau und der damit verbundene vergleichsweise hohe Preis.

Aus DE 100 38 792 C1, DE 38 02 225 A1, DE 102 32 821 A1, DE 102 37 946 A1, FR 1 401 676 A und DE 44 34 646 A1 sind Füllstandssensoren mit einer Thermosäule bekannt, wobei die Temperaturdifferenz zwischen den heißen Kontaktstellen und den kalten Kontaktstellen durch einen separaten Heizleiter erzeugt wird.

Der Erfindung liegt deshalb die Aufgabe zugrunde, die vorstehend beschriebenen bekannten Füllstandssensoren auf Thermoelementbasis entsprechend zu verbessern.

Diese Aufgabe wird durch einen Füllstandssensor und ein Betriebsverfahren bzw. ein Herstellungsverfahren gemäß den nebengeordneten Ansprüchen gelöst.

Die Erfindung umfasst die allgemeine technische Lehre, die einzelnen Thermoelemente nicht durch eine separate Heizung zu beheizen, sondern durch eine Eigenheizung mittels der Thermoelemente selbst, so dass auf eine separate Heizung wie bei den eingangs beschriebenen bekannten Füllstandssensoren auf Thermoelementbasis verzichtet werden kann. Die Eigenheizung besteht also bei dem erfindungsgemäßen Füllstandssensor aus den Thermoelementen und arbeitet entsprechend dem bekannten Peltier-Effekt.

Die Erfindung beansprucht jedoch auch Schutz für die Verwendung bekannter Füllstandssensoren auf Thermoelementbasis mit einer separaten Heizung, sofern die Heizung ungenutzt bleibt und die Erwärmung der Thermoelemente in der erfindungsgemäßen Weise erfolgt.

Für die Erwärmung der Thermoelemente wird im Rahmen der Erfindung der Peltier-Effekt ausgenutzt, der bei einem Stromfluss durch ein Thermoelement in Abhängigkeit von Richtung und Höhe des Stromflusses in den Kontaktstellen Wärme erzeugt oder vernichtet, was zu einer entsprechenden Temperaturdifferenz zwischen den heißen und kalten Kontaktstellen und damit zu einer entsprechenden Thermospannung führt. Nach dem Abschalten des Stroms kann man dann die während des Stromflusses entsprechend dem Peltier-Effekt aufgebaute Temperaturdifferenz zwischen den heißen und kalten Kontaktstellen der Thermoelemente als Seebeck-Spannung am Ausgang messen. Auch hierbei ist die während des Stromflusses aufgebaute Temperaturdifferenz und damit die anschließend messbare Spannung davon abhängig, ob das jeweilige Thermoelement in die Flüssigkeit eingetaucht war oder nicht, da die Flüssigkeit bei den eingetauchten Thermoelementen die Temperaturdifferenz aufgrund der guten Wärmeleitung relativ schnell abbaut. Bei dem erfindungsgemäßen Füllstandssensor lässt sich der Füllstand deshalb ebenfalls in einfacher Weise aus der von dem Füllstandssensor erzeugten elektrischen Spannung berechnen.

Bei dem erfindungsgemäßen Füllstandssensor erfolgt also vorzugsweise abwechselnd der Aufbau eines Temperaturgradienten entsprechend dem Peltier-Effekt und eine Messung des Temperaturgradienten entsprechend dem Seebeck-Effekt.

In einem bevorzugten Ausführungsbeispiel der Erfindung sind die Thermoelemente elektrisch in Reihe hintereinander geschaltet und bilden vorzugsweise eine langgestreckte Thermosäule, wobei die Thermosäule stumpfwinklig und vorzugsweise rechtwinklig zu dem Flüssigkeitsspiegel ausgerichtet ist. Der im Rahmen der Erfindung verwendete Begriff einer stumpfwinkligen Ausrichtung der Thermosäule relativ zu dem Flüssigkeitsspiegel umfasst hierbei Winkel von mehr als 45°, 55°, 65°, 75° oder 85° zwischen der Thermosäule und dem Flüssigkeitsspiegel.

Bei einem Einsatz des erfindungsgemäßen Füllstandssensors als Tanksensor zur Messung des Füllstands in einem Kraftstofftank ist zu berücksichtigen, dass Kraftstofftanks in Personenkraftwagen häufig eine zerklüftete Innenkontur aufweisen. Die Thermosäule ist dann vorzugsweise gekrümmt und folgt der Innenkontur des Kraftstofftanks.

Die einzelnen Thermoelemente sind dagegen vorzugsweise rechtwinklig oder zumindest stumpfwinklig zur Längsachse der Thermosäule ausgerichtet, d.h. parallel oder zumindest spitzwinklig zu dem Flüssigkeitsspiegel. Der im Rahmen der Erfindung verwendete Begriff einer spitzwinkligen Ausrichtung der Thermoelemente umfasst hierbei Winkel von weniger als 45°, 35°, 25°, 15° oder sogar weniger als 5°.

In einer Variante der Erfindung weist der Füllstandssensor nur eine einzige langgestreckte Thermosäule auf, die eine Vielzahl von Thermoelementen enthält, die elektrisch hintereinander in Reihe geschaltet sind.

In einer anderen Variante der Erfindung weist der Füllstandssensor dagegen mehrere, vorzugsweise zwei, langgestreckte Thermosäulen mit jeweils einer Vielzahl von Thermoelementen auf, wobei die Thermosäulen vorzugsweise elektrisch hintereinander geschaltet und im Wesentlichen parallel nebeneinander angeordnet sind.

Bei einer parallelen Anordnung von zwei langgestreckten Thermosäulen sind vorzugsweise die heißen Kontaktstellen der Thermoelemente der beiden Thermosäulen einander zugewandt, wodurch die Erhitzung effektiver wird. Die heißen Kontaktstellen der Thermoelemente liegen bei dieser Anordnung also zwischen den beiden Thermosäulen.

Es ist jedoch alternativ auch möglich, dass die kalten Kontaktstellen der beiden nebeneinander angeordneten Thermosäulen einander zugewandt sind. Bei dieser alternativen Anordnung befinden sich die heißen Kontaktstellen also außen, während die kalten Kontaktstellen zwischen den beiden Thermosäulen angeordnet sind.

Wie bei den eingangs beschriebenen bekannten Füllstandssensoren auf Thermoelementbasis weisen die einzelnen Thermoelemente zwei unterschiedliche Leitermaterialien auf, die an einer Kontaktstelle miteinander verbunden sind. Bei dem einen Leitermaterial kann es sich beispielsweise um eine Kupfer-Nickel-Legierung handeln, wobei sich CuNi44 besonders eignet. Bei dem,anderen Leitermaterial kann es sich dagegen um Kupfer, eine Kupfer-Mangan-Nickel-Legierung, insbesondere Manganin®, oder eine Nickel-Chromlegierung handeln. Die Erfindung ist jedoch hinsichtlich der Leitermaterialien der Thermoelemente nicht auf die vorstehend genannten Leitermaterialien beschränkt, sondern grundsätzlich auch mit anderen Leitermaterialien realisierbar.

Eine weitere Gemeinsamkeit mit dem eingangs beschriebenen bekannten Füllstandssensor besteht vorzugsweise darin, dass die beiden Leitermaterialien vorzugsweise auf ein Trägermaterial aufgebracht sind.

In einer Variante der Erfindung sind die beiden unterschiedlichen Leitermaterialien der Thermoelemente hierbei auf derselben Seite eines Trägermaterials (z.B. einer Kunststofffolie) aufgebracht.

In einer anderen Variante der Erfindung sind die beiden unterschiedlichen Leitermaterialien der Thermoelemente dagegen auf gegenüberliegenden Seiten des Trägermaterials angeordnet, wobei die verschiedenen Leitermaterialien durch eine durch das Trägermaterial hindurchgehende Durchkontaktierung elektrisch an einer Kontaktstelle miteinander verbunden sind.

Bei dem Trägermaterial für die verschiedenen Leitermaterialien der Thermoelemente kann es sich beispielsweise um eine Folie (z.B. aus Kunststoff, Kapton) handeln, jedoch kann auch ein dünnwandiges Rohr als Trägermaterial für die verschiedenen Leitermaterialien der Thermoelemente eingesetzt werden.

Weiterhin ist zu erwähnen, dass die Erfindung nicht nur den vorstehend beschriebenen erfindungsgemäßen Füllstandssensor als einzelnes Bauteil umfasst, sondern auch eine komplette Füllstands-Messvorrichtung mit einem solchen erfindungsgemäßen Füllstandssensor.

Die erfindungsgemäße Füllstands-Messvorrichtung weist vorzugsweise eine Stromquelle auf, die an den Füllstandssensor angeordnet ist und den Füllstandssensor mit einem Strom ansteuern kann, um in den einzelnen Thermoelementen gemäß dem vorstehend beschriebenen Peltier-Effekt eine Temperaturdifferenz zwischen den heißen und kalten Kontaktstellen zu erzeugen. Der im Rahmen der Erfindung verwendete Begriff einer Stromquelle ist hierbei allgemein zu verstehen und nicht auf idealisierte Stromquellen mit einem unendlichen Innenwiderstand beschränkt.

Beispielsweise kann die Stromquelle zur Bestromung des Füllstandssensor einen Impulsgenerator aufweisen, der den Füllstandssensor mit Stromimpulsen ansteuert.

Vorzugsweise erfolgt die Bestromung des Füllstandssensors mit einem vorgegebenen elektrischen Energieeintrag, um eine vorgegebene Erwärmung zu erreichen. Bei einer Impulsansteuerung des Füllstandssensors ist vorzugsweise eine Regelung vorgesehen, welche die elektrische Ladung regelt, die bei einem Impuls fließt, was bei einer konstanten Ansteuerungsspannung zu einem vorgegebenen elektrischen Energieeintrag führt.

Es ist jedoch alternativ auch möglich, dass die Stromquelle den Füllstandssensor mit einem kontinuierlichen Strom ansteuert, um in den Thermoelementen entsprechend dem Peltier-Effekt eine Temperaturdifferenz zu erzeugen.

Weiterhin weist die erfindungsgemäße Füllstands-Messvorrichtung vorzugsweise ein Spannungsmessgerät auf, das an den Füllstandssensor angeschlossen ist und die von dem Füllstandssensor im stromlosen Zustand erzeugte elektrische Spannung misst, damit daraus der Füllstand abgeleitet werden kann.

Darüber hinaus weist die erfindungsgemäße Füllstands-Messvorrichtung vorzugsweise einen an das Spannungsmessgerät angeschlossenen Integrierer auf, der die gemessene Spannung einfach oder doppelt über einen gewissen Zeitraum integriert, wodurch das Rauschen minimiert und ein Offset eliminiert wird.

Die Ansteuerung und Auswertung des Füllstandssensors kann jedoch bei der erfindungsgemäßen Füllstands-Messvorrichtung auch durch einen herkömmlichen Mikrocontroller erfolgen, der sowohl die elektrische Ansteuerung der Thermoelemente bei der Aufheizung übernimmt als auch die Messung der von den Thermoelementen erzeugten Spannung durchführt.

In einem bevorzugten Ausführungsbeispiel der erfindungsgemäßen Füllstands-Messvorrichtung ist der Füllstandssensor in einem Kraftstofftank eines Kraftfahrzeugs angeordnet und misst den Füllstand des Kraftstoffs in dem Kraftstofftank.

Der erfindungsgemäße Füllstandssensor kann jedoch auch zur Messung des Füllstands anderer Betriebsflüssigkeiten eines Kraftfahrzeugs eingesetzt werden, wie beispielsweise der Kühlflüssigkeit, des Motoröls oder der Bremsflüssigkeit. Der Füllstandssensor ist dann entsprechend in einem Kühlflüssigkeitsbehälter, einem Motorölbehälter bzw. einem Bremsflüssigkeitsbehälter angeordnet.

Darüber hinaus eignet sich der erfindungsgemäße Füllstandssensor auch allgemein zur Messung des Füllstands von Fluiden, wobei es sich nicht notwendigerweise um Flüssigkeiten handeln muss. Beispielsweise kann der erfindungsgemäße Füllstandssensor auch den Füllstand von Granulaten, Pulver, Spänen, Schüttgut, etc.. Dementsprechend kann der erfindungsgemäße Füllstandssensor in verschiedensten mobilen oder stationären Behältern angeordnet sein, wie beispielsweise in Tanks, Silos, Bunkern, etc.. Das jeweilige Fluid sollte lediglich eine ausreichende Wärmeleitfähigkeit haben, die größer als diejenige von Luft sein sollte.

Weiterhin umfasst die Erfindung auch ein Betriebsverfahren für den vorstehend beschriebenen erfindungsgemäßen Füllstandssensor, bei dem die einzelnen Thermoelemente nicht durch eine separate Heizung erwärmt werden, wie dies bei den eingangs beschriebenen bekannten Füllstandssensoren der Fall ist. Im Rahmen des erfindungsgemäßen Betriebsverfahrens können deshalb auch herkömmliche Füllstandssensoren mit einer separaten Heizung eingesetzt werden, wobei die Heizung nicht benötigt wird und deshalb inaktiv bleibt.

Im Rahmen des erfindungsgemäßen Betriebsverfahrens erfolgt vorzugsweise zunächst eine Bestromung der Thermoelemente zur Erzeugung einer Temperaturdifferenz über den einzelnen Thermoelementen und anschließend eine Messung der von dem Füllstandssensor erzeugten elektrischen Spannung, wobei die Messung vorzugsweise nach der Bestromung im stromlosen Zustand erfolgt. In einem weiteren Schritt wird dann aus der so gemessenen Spannung der Füllstand bestimmt.

Die Bestromung des Füllstandssensors erfolgt bei dem erfindungsgemäßen Betriebsverfahren vorzugsweise mit Stromimpulsen. Die Erfindung ist jedoch nicht auf eine Impulsansteuerung der Thermoelemente beschränkt, sondern grundsätzlich auch mit einer kontinuierlichen Bestromung der Thermoelemente realisierbar.

Ferner umfasst die Erfindung auch ein Herstellungsverfahren für den vorstehend beschriebenen erfindungsgemäßen Füllstandssensor, das sich dadurch auszeichnet, dass auf das Trägermaterial für die Thermoelemente nicht zusätzlich eine separate Heizung aufgebracht wird.

Die Leitermaterialien der Thermoelemente können hierbei durch verschiedene Verfahren auf das Trägermaterial aufgebracht werden, wie beispielsweise durch Sputtern, Drucken, durch galvanische Verfahren oder durch ätztechnische Verfahren. Die Erfindung ist jedoch hinsichtlich der Aufbringung der verschiedenen Leitermaterialien der Thermoelemente auf das Trägermaterial nicht auf die vorstehend beispielhaft genannten Verfahren beschränkt, sondern grundsätzlich auch mit anderen Verfahren realisierbar.

Schließlich umfasst die Erfindung auch die neuartige Verwendung mehrerer in Reihe hintereinander geschalteter Thermoelemente ohne eine separate Heizung zur Messung eines Füllstands einer Flüssigkeit, insbesondere zur Messung des Füllstands eines Kraftstoffs in einem Kraftstofftank eines Kraftfahrzeugs.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Darstellung eines erfindungsgemäßen Füllstandssensors mit einer einzigen Thermosäule,
- Figur 2: ein alternatives Ausführungsbeispiel eines erfindungsgemäßen Füllstandssensors mit zwei Thermosäulen,
- Figur 3: eine schematische Darstellung eines Kraftstofftanks eines Kraftfahrzeugs mit einem darin angeordneten Füllstandssensor gemäß Figur 1,
- Figur 4: eine schematische Darstellung eines einzelnen Thermoelements des erfindungsgemäßen Füllstandssensors gemäß den Figuren 1 bis 3,
- Figur 5: eine schematische Querschnittsdarstellung eines erfindungsgemäßen Füllstandssensors, bei dem die verschiedenen Leitermaterialien der Thermoelemente auf derselben Seite eines Trägermaterials angeordnet sind,
- Figur 6: eine vereinfachte Querschnittsdarstellung eines alternativen Ausführungsbeispiels eines erfindungsgemäßen Füllstandssensors, bei dem die verschiedenen Leitermaterialien der Thermoelemente auf gegenüberliegenden Seiten des Trägermaterials angeordnet sind,
Figur 7 eine schematische Darstellung eines Ausschnitts einer Thermosäule mit zeitlich nacheinander aufgebrachten Leitermaterialien,
Figur 8 einen Ausschnitt eines alternativen Ausführungsbeispiels einer Thermosäule aus einheitlichem Grundmaterial mit einer zweiten niederohmigen, thermoelektrisch unterschiedlichen Schicht,
Figur 9 eine schematische Darstellung eines Ausschnitts aus einer Thermosäule, bei der die verschiedenen Leitermaterialien der Thermoelemente auf gegenüberliegenden Seiten einer Trägerschicht aufgebracht sind,
Figur 10 eine Querschnittsansicht durch die Thermosäule aus Figur 9 entlang der Schnittlinie A-A,
Figur 11 ein vereinfachtes Blockschaltbild einer erfindungsgemäßen Füllstands-Messvorrichtung,
Figur 12 ein extrem vereinfachtes Blockschaltbild einer erfindungsgemäßen Füllstands-Messvorrichtung mit einem Mikrocontroller zur Ansteuerung und Auswertung des Füllstandssensors sowie
Figur 13A-D verschiedene Verläufe von Strom und Spannung an dem erfindungsgemäßen Füllstandssensor.

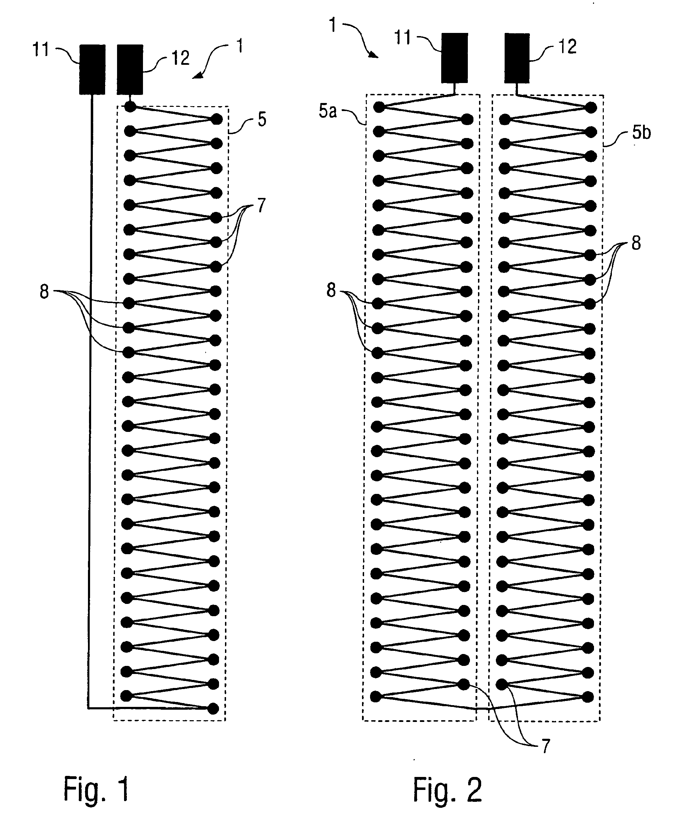

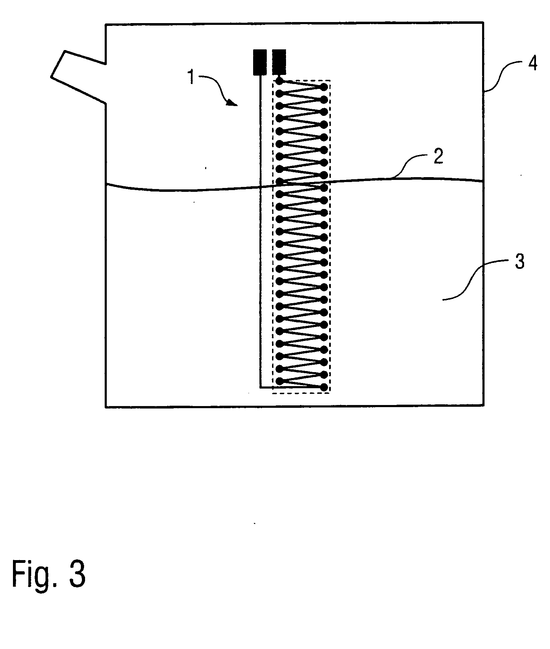

Die Figuren 1 und 3 zeigen einen erfindungsgemäßen Füllstandssensor 1, der beispielsweise zur Messung eines Füllstands 2 eines Kraftstoffs 3 in einem Kraftstofftank 4 eines Kraftfahrzeugs eingesetzt werden kann, wie aus Figur 3 ersichtlich ist.

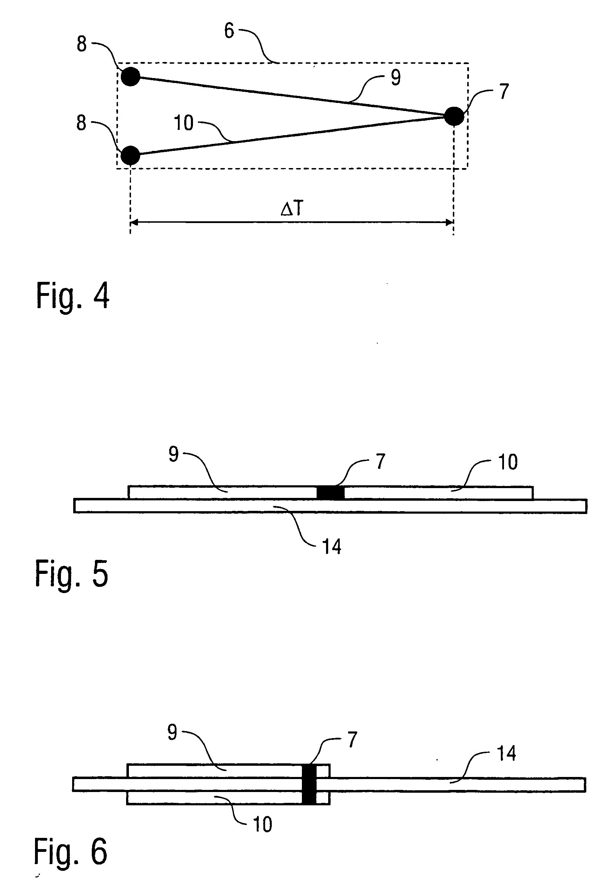

Der Füllstandssensor 1 weist eine einzige Thermosäule 5 auf, die eine Vielzahl von elektrisch hintereinander geschalteten Thermoelementen 6 enthält, wobei Figur 4 den Aufbau der einzelnen Thermoelemente 6 zeigt. Die einzelnen Thermoelemente 6 weisen jeweils heiße Kontaktstellen 7 und kalte Kontaktstellen 8 auf, wobei die heißen Kontaktstellen 7 einerseits und die kalten Kontaktstellen 8 andererseits in zwei parallelen Reihen nebeneinander angeordnet sind.

Weiterhin weisen die einzelnen Thermoelemente 6 jeweils zwei unterschiedliche Leitermaterialien 9, 10 auf, wobei das eine Leitermaterial in diesem Ausführungsbeispiel eine Kupfer-Nickel-Legierung ist, während das andere Leitermaterial Manganin® ist.

Die Leitermaterialien 9, 10 der einzelnen Thermoelemente 6 sind hierbei auf ein Trägermaterial aufgebracht, wie später noch detailliert beschrieben wird.

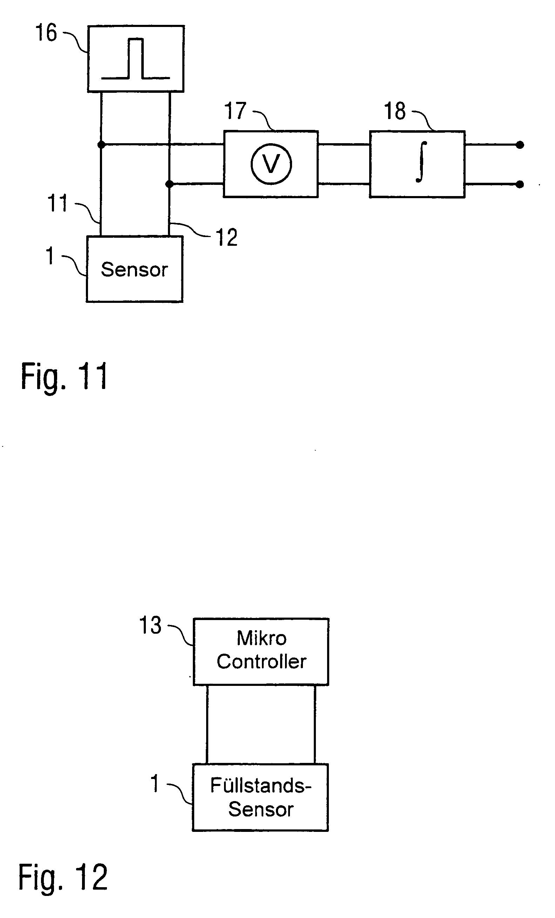

Die Thermosäule 1 ist über zwei Kontaktflächen 11, 12 elektrisch kontaktierbar, wobei die Ansteuerung des Füllstandssensors 1 beispielsweise durch einen Mikrocontroller 13 erfolgen kann, wie in Figur 12 schematisch dargestellt ist.

Bei einer Füllstandsmessung steuert der Mikrocontroller 13 den Füllstandssensor 1 zunächst mit Stromimpulsen an, so dass die einzelnen Thermoelemente 6 aufgrund des bekannten Peltier-Effekts eine Temperaturdifferenz zwischen den heißen Kontaktstellen 7 und den kalten Kontaktstellen 8 erzeugen.

Nach dieser Bestromung misst der Mikrocontroller 13 dann die elektrische Spannung an den Kontaktflächen 11, 12, wobei diese Spannung gemäß dem bekannten Seebeck-Effekt entsprechend der Temperaturdifferenz zwischen den heißen Kontaktstellen 7 und den kalten Kontaktstellen 8 erzeugt wird.

Bei den in den Kraftstoff 3 unterhalb des Füllstands 2 eingetauchten Thermoelementen 6 wird die Temperaturdifferenz zwischen den heißen Kontaktstellen 7 und den kalten Kontaktstellen 8 durch die Wärmeleitfähigkeit des Kraftstoffs 3 weitgehend ausgeglichen, so dass die eingetauchten Thermoelemente 6 nur eine geringe Spannung erzeugen.

Bei den nicht in den Kraftstoff 3 eingetauchten Thermoelementen 6 oberhalb des Füllstands 2 in dem Kraftstofftank 4 wird die Temperaturdifferenz zwischen den heißen Kontaktstellen 7 und den kalten Kontaktstellen 8 dagegen kaum abgebaut, da die umgebende Luft nur eine relativ geringe Wärmeleitfähigkeit aufweist. Die nicht eingetauchten Thermoelemente 6 erzeugen deshalb eine relativ große Thermospannung, die an den Kontaktflächen 11, 12 des Füllstandssensors 1 messbar ist. Die an den Kontaktflächen 11, 12 messbare elektrische Spannung gibt also direkt den Füllstand 2 des Kraftstoffs 3 in den Kraftstofftank 4 wieder.

Figur 2 zeigt ein alternatives Ausführungsbeispiel eines erfindungsgemäßen Füllstandssensors 1, das weitgehend mit dem vorstehend beschriebenen Ausführungsbeispiel übereinstimmt, so dass zur Vermeidung von Wiederholungen auf die vorstehende Beschreibung zu Figur 1 verwiesen wird, wobei für entsprechende Bauteile dieselben Bezugszeichen verwendet werden.

Eine Besonderheit dieses Ausführungsbeispiels besteht darin, dass der Füllstandssensor 1 zwei Thermosäulen 5a, 5b aufweist, die parallel nebeneinander angeordnet sind. Die kalten Kontaktstellen 8 sind hierbei an der Außenseite des Füllstandssensors 1 angeordnet, wohingegen die heißen Kontaktstellen 7 der beiden Thermosäulen 5a, 5b einander zugewandt sind. Die räumliche Orientierung der heißen und kalten Kontaktstellen 7, 8 ist jedoch auch umgekehrt möglich.

Figur 5 zeigt eine vereinfachte Querschnittsansicht durch den Füllstandssensor 1 gemäß Figur 1. Daraus ist ersichtlich, dass die Leitermaterialien 9, 10 auf derselben Seite eines Trägermaterials 14 angeordnet sind, wobei das Trägermaterial 14 in diesem Ausführungsbeispiel eine Kunststofffolie ist.

Figur 6 zeigt eine vereinfachte Querschnittsansicht durch ein alternatives Ausführungsbeispiel des Füllstandssensors 1 gemäß Figur 1, bei dem die Leitermaterialien 9, 10 der Thermoelemente 6 auf gegenüberliegenden Seiten des Trägermaterials 14 angeordnet sind. Die elektrische Verbindung der beiden Leitermaterialien 9, 10 an der Kontaktstelle 7 erfolgt hierbei durch eine Durchkontaktierung 15, die durch das Trägermaterial 14 hindurch geht.

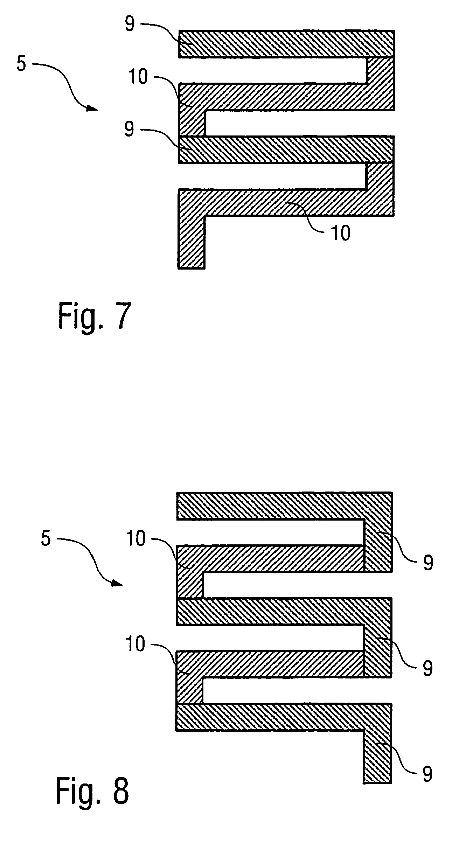

Figur 7 zeigt einen Ausschnitt durch eine Thermosäule 5 eines erfindungsgemäßen Füllstandssensors 1, wobei die Leitermaterialien 9, 10 nacheinander aufgebracht wurden, was beispielsweise durch Sputtern, Drucken oder durch ein galvanisches Herstellungsverfahren erfolgen kann.

Figur 8 zeigt eine vereinfachte Darstellung eines alternativen Ausführungsbeispiels einer erfindungsgemäßen Thermosäule 5, bei der das Leitermaterial 10 ein einheitliches Grundmaterial bildet, auf das das Leitermaterial 9 als zweite niederohmige, thermoelektrisch unterschiedliche Schicht aufgebracht ist. Die Aufbringung des Leitermaterials 9 kann hierbei ebenfalls durch Sputtern, Drucken oder durch ein galvanisches Verfahren erfolgen.

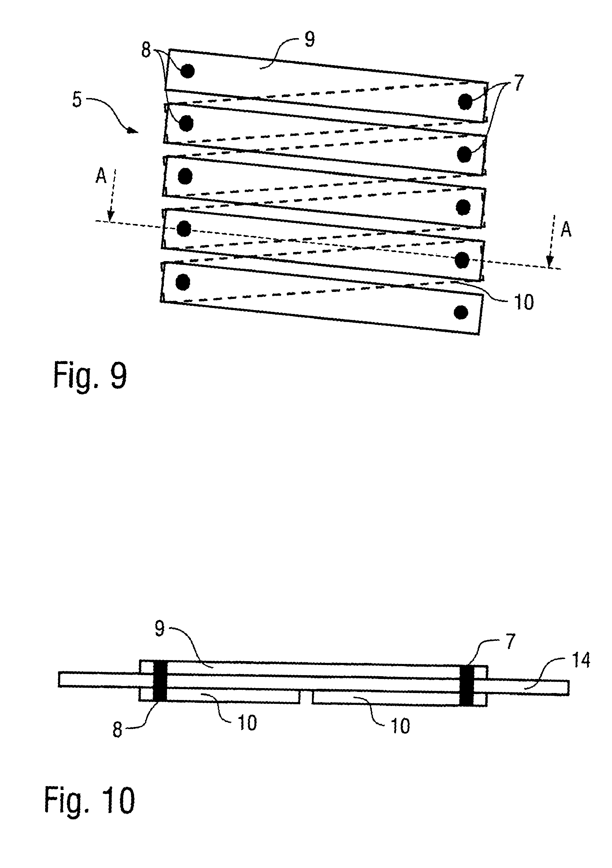

Die Figuren 9 und 10 zeigen ein Ausführungsbeispiel einer Thermosäule 5, bei dem die Leitermaterialien 9, 10 der einzelnen Thermoelemente 6 beidseitig auf das Trägermaterial 14 aufgebracht sind, wobei an den heißen Kontaktstellen 7 und den kalten Kontaktstellen 8 Durchkontaktierungen vorgesehen sind, die durch das Trägermaterial 14 hindurchgehen und die Leitermaterialien 9, 10 miteinander verbinden.

Figur 11 zeigt ein vereinfachtes Blockschaltbild einer erfindungsgemäßen Füllstands-Messvorrichtung mit dem vorstehend beschriebenen erfindungsgemäßen Füllstandssensor 1.

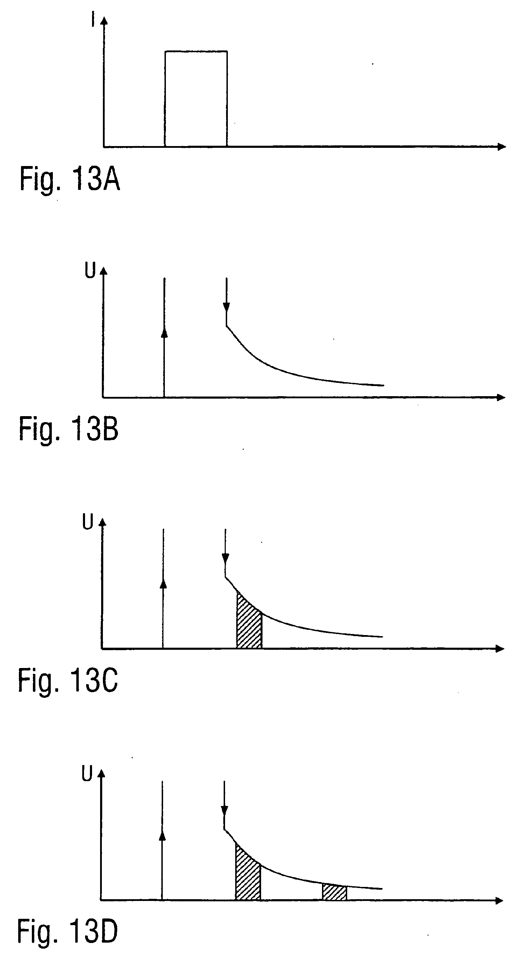

Der Füllstandssensor 1 wird hierbei von einem Impulsgenerator 16 mit Stromimpulsen angesteuert, die in Figur 13A beispielhaft dargestellt sind. Die von dem Impulsgenerator 16 erzeugten Stromimpulse führen zum Aufbau einer Temperaturdifferenz zwischen den heißen Kontaktstellen 7 und den kalten Kontaktstellen 8 entsprechend dem bekannten Peltier-Effekt. Dadurch entsteht an den Kontaktflächen 11, 12 des Füllstandssensors 1 eine Thermospannung, die von einem Spannungsmessgerät 17 gemessen wird, wobei der zeitliche Verlauf der gemessenen Spannung in den Figuren 13B-13D beispielhaft dargestellt ist. Nach dem Ende eines Stromimpulses nimmt die von dem Füllstandssensor 1 erzeugte Spannung allmählich ab, da sich die Temperaturdifferenz zwischen den heißen Kontaktstellen 7 und den kalten Kontaktstellen 8 aufgrund der unvermeidbaren Wärmeleitung abbaut. Die gemessene Spannung ist jedoch ein direktes Maß für den Füllstand 2 der zu messenden Flüssigkeit.

Zur Minimierung des Rauschens und zur Beseitigung eines Offsets weist die Füllstands-Messvorrichtung weiterhin einen Integrierer 18 auf, der die gemessene Spannung einfach (vgl. Fig. 13C) oder doppelt (vgl. Fig. 13D) integriert.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Füllstandssensor
- 2: Füllstand
- 3: Kraftstoff
- 4: Kraftstofftank
- 5: Thermosäule
- 5a, 5b: Thermosäulen
- 6: Thermoelement
- 7: Heiße Kontaktstellen
- 8: Kalte Kontaktstellen
- 9, 10: Leitermaterialien
- 11, 12: Kontaktflächen
- 13: Mikrocontroller
- 14: Trägermaterial
- 15: Durchkontaktierung
- 16: Impulsgenerator
- 17: Spannungsmessgerät
- 18: Integrierer

## Patentansprüche

1. Füllstandssensor (1) zur Messung eines Füllstands (2) eines Fluids (3), insbesondere zur Erfassung des Füllstands (2) eines Kraftstoffs (3) in einem Kraftstofftank (4) eines Kraftfahrzeugs, mit mehreren Thermoelementen (6) mit heißen Kontaktstellen (7) und kalten Kontaktstellen (8), wobei die Thermoelemente (6) in Reihe hintereinander geschaltet sind und eine langgestreckte Thermosäule (5, 5a, 5b) bilden,
**gekennzeichnet durch**
eine Eigenheizung der Thermoelemente mittels der Thermoelemente entsprechend dem Peltier-Effekt, wobei der Peltier-Effekt eine Temperaturdifferenz zwischen den heißen Kontaktstellen (7) und den kalten Kontaktstellen (8) erzeugt, so dass keine separate Heizung vorgesehen ist, um die Thermoelemente (6) zu erhitzen.

2. Füllstandssensor (1) nach Anspruch 1, **dadurch gekennzeichnet, dass** die einzelnen Thermoelemente (6) jeweils im Wesentlichen rechtwinklig oder stumpfwinklig zur Längsachse der Thermosäule (5, 5a, 5b) ausgerichtet sind.

3. Füllstandssensor (1) nach einem der vorhergehenden Ansprüche, **dadurch gekennzeichnet, dass** die Thermoelemente (6) mehrere langgestreckte Thermosäulen (5a, 5b) bilden, die in Reihe hintereinander geschaltet und im Wesentlichen parallel nebeneinander angeordnet sind.

4. Füllstandssensor (1) nach Anspruch 2 oder 3, **dadurch gekennzeichnet, dass** die heißen Kontaktstellen (7) einerseits und die kalten Kontaktstellen (8) andererseits auf gegenüber liegenden Seiten der Thermosäule (5, 5a, 5b) jeweils in einer Reihe angeordnet sind.

5. Füllstandssensor (1) nach Anspruch 3 und Anspruch 4, **dadurch gekennzeichnet, dass** in den benachbarten Thermosäulen (5a, 5b) entweder die heißen Kontaktstellen (7) oder die kalten Kontaktstellen (8) einander zugewandt sind.

6. Füllstandssensor (1) nach einem der vorhergehenden Ansprüche, **dadurch gekennzeichnet, dass** die einzelnen Thermoelemente (6) jeweils zwei Leitermaterialen (9, 10) aufweisen, die an einer Kontaktstelle (7) miteinander verbunden sind.

7. Füllstandssensor (1) nach Anspruch 6, **dadurch gekennzeichnet, dass** die beiden Leitermaterialien (9, 10) der einzelnen Thermoelemente (6) jeweils auf derselben Seite eines Trägermaterials (14) angeordnet sind.

8. Füllstandssensor (1) nach Anspruch 6, **dadurch gekennzeichnet, dass** die beiden Leitermaterialien (9, 10) der einzelnen Thermoelemente (6) jeweils auf gegenüber liegenden Seiten eines Trägermaterials (14) angeordnet und mittels einer Durchkontaktierung (15) an der Kontaktstelle miteinander verbunden sind.

9. Füllstandssensor (1) nach einem der Ansprüche 6 bis 8, **dadurch gekennzeichnet, dass** das eine Leitermaterial (9) eine Kupfer-Nickel-Legierung, insbesondere CuNi44, ist.

10. Füllstandssensor (1) nach einem der Ansprüche 6 bis 9, **dadurch gekennzeichnet, dass** das andere Leitermaterial (10) Kupfer, eine Kupfer-Mangan-Nickel-Legierung oder eine NickelChrom-Legierung ist.

11. Füllstandssensor (1) nach einem der vorhergehenden Ansprüche, **dadurch gekennzeichnet, dass** die Thermoelemente (6) bei einer Bestromung in Abhängigkeit von dem elektrischen Strom die heißen Kontaktstellen (7) erwärmen und die kalten Kontaktstellen (8) kühlen, wohingegen die Thermoelemente (6) im stromlosem Zustand in Abhängigkeit von der Temperaturdifferenz (ΔT) zwischen den heißen Kontaktstellen (7) und den kalten Kontaktstellen (8) eine Thermospannung (U) zwischen den heißen Kontaktstellen (7) und den kalten Kontaktstellen (8) erzeugen.

12. Füllstandssensor (1) nach einem der vorhergehenden Ansprüche, **dadurch gekennzeichnet, dass** die Thermoelemente (6) auf einer Folie oder einem dünnwandigen Rohr als Trägermaterial angeordnet sind.

13. Füllstands-Messvorrichtung mit einem Füllstandssensor (1) nach einem der vorhergehenden Ansprüche.

14. Füllstands-Messvorrichtung nach Anspruch 13,
**gekennzeichnet durch**
a) eine an den Füllstandssensor (1) angeschlossene Stromquelle (13, 16) zur Bestromung des Füllstandssensors (1) und
b) ein an den Füllstandssensor (1) angeschlossenes Spannungsmessgerät (17) zur Messung der von dem Füllstandssensor (1) im stromlosen Zustand erzeugten elektrischen Spannung (U).

15. Füllstands-Messvorrichtung nach Anspruch 14, **dadurch gekennzeichnet, dass** die Stromquelle (16) einen Impulsgenerator aufweist und den Füllstandssensor (1) mit Stromimpulsen ansteuert.

16. Füllstands-Messvorrichtung nach Anspruch 14 oder 15, **gekennzeichnet durch** einen an das Spannungsmessgerät (17) angeschlossenen Integrierer (18) zur einfachen oder doppelten Integration der gemessenen Spannung.

17. Füllstands-Messvorrichtung nach Anspruch 13, **gekennzeichnet durch** einen an den Füllstandssensor (1) angeschlossenen Mikrocontroller (13) zur elektrischen Ansteuerung des Füllstandssensors (1) und zur Messung der von dem Füllstandssensor (1) erzeugten elektrischen Spannung.

18. Füllstands-Messvorrichtung nach einem der Ansprüche 13 bis 17, **dadurch gekennzeichnet** durch das der Füllstandssensor (1) in einem Kraftstofftank (4) eines Kraftfahrzeugs angeordnet ist und den Füllstand (2) des Kraftstoffs (3) in dem Kraftstofftank (4) misst.

19. Füllstands-Messvorrichtung nach einem der Ansprüche 13 bis 18, **dadurch gekennzeichnet, dass** die Thermosäule (5) bzw. die Thermosäulen (5a, 5b) stumpfwinklig, insbesondere im Wesentlichen rechtwinklig, zu dem zu messenden Fluidspiegel ausgerichtet ist.

20. Füllstands-Messvorrichtung nach einem der Ansprüche 13 bis 19, **dadurch gekennzeichnet, dass** die einzelnen Thermoelemente (6) jeweils im Wesentlichen parallel oder spitzwinklig zu dem zu messenden Fluidspiegel ausgerichtet sind.

21. Betriebsverfahren für einen Füllstandssensor (1), insbesondere nach einem der Ansprüche 1 bis 12, **dadurch gekennzeichnet, dass** die Thermoelemente (6) nicht durch eine separate Heizung beheizt werden, sondern durch eine Eigenheizung mittels der Thermoelemente (6) entsprechend dem Peltier-Effekt, wobei der Peltier-Effekt eine Temperaturdifferenz zwischen den heißen Kontaktstellen (7) und den kalten Kontaktstellen (8) erzeugt.

22. Betriebsverfahren nach Anspruch 21,
**gekennzeichnet durch** folgende Schritte:
a) Bestromung der Thermoelemente (6) zur Erzeugung einer Temperaturdifferenz (ΔT) über den einzelnen Thermoelementen (6),
b) Messung der von dem Füllstandssensor (1) erzeugten elektrischen Spannung (U) und
c) Bestimmung des Füllstands (2) aus der gemessenen Spannung (U).

23. Betriebsverfahren nach Anspruch 21 oder 22, **dadurch gekennzeichnet, dass** der Füllstandssensor (1) mit Stromimpulsen bestromt wird.

24. Betriebsverfahren nach einem der Ansprüche 21 bis 23, **dadurch gekennzeichnet, dass** die Messung der Spannung nach der Bestromung des Füllstandssensors (1) im stromlosen Zustand erfolgt.

25. Betriebsverfahren nach einem der Ansprüche 21 bis 24, **gekennzeichnet durch** folgenden Schritt:
Einfache oder doppelte Integration der gemessenen Spannung.

26. Betriebsverfahren nach einem der Ansprüche 21 bis 24, **dadurch gekennzeichnet, dass** der Füllstandssensor (1) von einem Mikrocontroller (13) angesteuert und ausgemessen wird.

27. Herstellungsverfahren für einen Füllstandssensor (1) mit den folgenden Schritten:
a) Aufbringen mehrerer Thermoelemente (6) auf ein Trägermaterial (14), so dass die Thermoelemente (6) eine langgestreckte Thermosäule bilden (5, 5a, 5b),
b) Elektrische Verbindung der Thermoelemente (6) zu einer Reihenschaltung der einzelnen Thermoelemente (6),
**dadurch gekennzeichnet, dass**
auf das Trägermaterial (14) keine separate Heizung aufgebracht wird.

28. Herstellungsverfahren nach Anspruch 27, **dadurch gekennzeichnet, dass** die einzelnen Thermoelemente (6) jeweils zwei Leitermaterialen (9, 10) aufweisen, die an einer Kontaktstelle (7, 8) miteinander verbunden sind.

29. Herstellungsverfahren nach Anspruch 28, **dadurch gekennzeichnet, dass** die beiden Leitermaterialien (9, 10) auf dieselbe Seite des Trägermaterials (14) aufgebracht werden.

30. Herstellungsverfahren nach Anspruch 28, **dadurch gekennzeichnet, dass** die beiden Leitermaterialien (9, 10) auf gegenüber liegende Seiten des Trägermaterials (14) aufgebracht werden, wobei in dem Trägermaterial (14) an der Kontaktstelle eine Durchkontaktierung (15) erzeugt wird, die durch das Trägermaterial (14) hindurchgeht.

31. Herstellungsverfahren nach einem der Ansprüche 27 bis 29, **dadurch gekennzeichnet, dass** die Leitermaterialien (9, 10) der Thermoelemente (6) durch eines der folgenden Verfahren auf das Trägermaterial (14) aufgebracht werden:
a) Sputtern,
b) Drucken,
c) galvanische Verfahren oder
d) ätztechnische Verfahren.

32. Verwendung mehrerer in Reihe hintereinander geschalteter Thermoelemente (6) ohne eine separate Heizung, sondern mit einer Eigenheizung mittels der Thermoelemente (6) entsprechend dem Peltier-Effekt, zur Messung eines Füllstands (2) eines Fluids (3), insbesondere zur Messung des Füllstands (2) eines Kraftstoffs (3) in einem Kraftstofftank (4) eines Kraftfahrzeugs.

## Claims

1. A filling level sensor (1) for measuring a filling level (2) of a fluid (3), particularly for detecting the filling level (2) of a fuel (3) in a fuel tank (4) of a motor vehicle, with several thermoelements (6) comprising hot contact points (7) and cold contact points (8), wherein the thermoelements (6) are connected in series behind each other and form an elongated thermocolumn (5, 5a, 5b),
**characterized by**
a self-heating of the thermoelements by the thermoelements themselves according to the Peltier effect, wherein the Peltier effect creates a temperature difference between the hot contact points (7) and the cold contact points (8), so that no separate heating is provided for heating the thermoelements (6).

2. The filling level sensor (1) according to claim 1, **characterized in that** the individual thermoelements (6) are aligned substantially at a right angle or at an obtuse angle to the longitudinal axis of the thermocolumn (5, 5a, 5b).

3. The filling level sensor (1) according to one of the preceding claims, **characterized in that** the thermoelements (6) form several elongated thermocolumns (5a, 5b) that are connected in series behind each other and are arranged substantially parallel adjacent to each other.

4. The filling level sensor (1) according to Claim 2 or 3, **characterized in that** the hot contact points (7) are arranged on the one hand and the cold contact points (8) on the other hand on opposite sides of the thermocolumn (5, 5a, 5b) in a series.

5. The filling level sensor (1) according to Claim 3 and Claim 4, **characterized in that** in the adjacent thermocolumns (5a, 5b) either the hot contact points (7) or the cold contact points (8) face each other.

6. The filling level sensor (1) according to one of the preceding claims, **characterized in that** the individual thermoelements (6) comprise two conductor materials (9, 10) that are connected to each other at a contact point (7).

7. The filling level sensor (1) according to Claim 6, **characterized in that** the two conductor materials (9, 10) of the individual thermoelements (6) are arranged on the same side of a carrier material (14).

8. The filling level sensor (1) according to Claim 6, **characterized in that** the two conductor materials (9, 10) of the individual thermoelements (6) are arranged on opposite sides of a carrier material (14) and are connected to one another at the contact point by a plated-through hole (15).

9. The filling level sensor (1) according to one of Claims 6 to 8, **characterized in that** the one conductor material (9) is a copper-nickel alloy, especially CuNi44.

10. The filling level sensor (1) according to one of Claims 6 to 9, **characterized in that** the other conductor material (10) is copper, a copper-manganese-nickel alloy or a nickel-chromium alloy.

11. The filling level sensor (1) according to one of the preceding claims, **characterized in that** the thermoelements (6) heat the hot contact points (7) and cool the cold contact points (8) when current is applied as a function of the electrical current, whereas the thermoelements (6) produce a thermovoltage (U) between the hot contact points (7) and the cold contact points (8) in the currentless state as a function of the temperature difference (ΔT) between the hot contact points (7) and the cold contact points (8).

12. The filling level sensor (1) according to one of the preceding claims, **characterized in that** the thermoelements (6) are arranged on a foil or a thin-walled tube as carrier material.

13. A filling level measuring apparatus with a filling level sensor (1) according to one of the preceding claims.

14. The filling level measuring apparatus according to Claim 13, **characterized by**
a) a current source (13, 16) connected to the filling level sensor (1) for supplying the filling level sensor (1) with a current and
b) a voltage measuring apparatus (17) connected to the filling level sensor (1) for measuring the electrical voltage (U) produced by the filling level sensor (1) in a currentless state.

15. The filling level measuring apparatus according to Claim 14, **characterized in that** the current source (16) comprises an impulse generator and controls the filling level sensor (1) with current impulses.

16. The filling level measuring apparatus according to Claim 14 or 15, **characterized by** an integrator (18) connected to the voltage measuring apparatus (17) for a simple or double integration of the measured voltage.

17. The filling level measuring apparatus according to Claim 13, **characterized by** a microcontroller (13) connected to the filling level sensor (1) for the electrical controlling of the filling level sensor (1) and for measuring the electrical voltage produced by the filling level sensor (1).

18. The filling level measuring apparatus according to one of Claims 13 to 17, **characterized in that** the filling level sensor (1) is arranged in a fuel tank (4) of a motor vehicle and measures the filling level (2) of the fuel (3) in the fuel tank (4).

19. The filling level measuring apparatus according to one of Claims 13 to 18, **characterized in that** the thermocolumn (5) and/or thermocolumns (5a, 5b) are aligned at an obtuse angle, especially substantially at a right angle to the fluid level to be measured.

20. The filling level measuring apparatus according to one of Claims 13 to 19, **characterized in that** the individual thermoelements (6) are aligned substantially parallel to or at an acute angle to the fluid level to be measured.

21. An operating method for a filling level sensor (1), particularly according to one of Claims 1 to 14, **characterized in that** the thermoelements (6) are not heated by a separate heating, but by a self-heating by the thermoelements (6) according to the Peltier effect , wherein the Peltier effect creates a temperature difference between the hot contact points (7) and the cold contact points (8).

22. The operating process according to Claim 21, **characterized by** the following steps:
a) supplying the thermoelements (6) with a current for producing a temperature difference (ΔT) over the individual thermoelements (6),
b) measuring an electrical voltage (U) produced by the filling level sensor (1) and
c) determining a filling level (2) from the measured voltage (U).

23. The operating process according to Claim 21 or 22, **characterized in that** the filling level sensor (1) is supplied with current impulses.

24. The operating process according to one of Claims 21 to 23, **characterized in that** the measuring of the voltage takes place in the currentless state after the filling level sensor (1) has been supplied with current.

25. The operating process according to one of Claim 21 to 24, **characterized by** the following step:
Simple or double integration of the measured voltage.

26. The operating process according to one of Claims 21 to 24, **characterized in that** the filling level sensor (1) is controlled and measured by a microcontroller (13).

27. A manufacturing process for a filling level sensor (1) with the following steps:
a) application of several thermoelements (6) on a carrier material (14), so that the thermoelements (6) form an elongated thermocolumn (5, 5a, 5b),
b) electrical connection of the thermoelements (6) to a series connection of the individual thermoelements (6),
**characterized in that**
no separate heating is applied on the carrier material (14).

28. A manufacturing process according to Claim 27, **characterized in that** the individual thermoelements (6) comprise two conductor materials (9, 10) that are connected to one another at a contact point (7, 8).

29. A manufacturing process according to Claim 28, **characterized in that** the two conductor materials (9, 10) are applied on the same side of the carrier material (14).

30. A manufacturing process according to Claim 28, **characterized in that** the two conductor materials (9, 10) are applied on opposite sides of the carrier material (14) and that a plated-through hole (15) is produced in the carrier material (14) at the contact point and extends through the carrier material (14).

31. A manufacturing process according to one of Claims 27 to 29, **characterized in that** the conductor materials (9, 10) of the thermoelements (6) are applied by one of the following processes onto the carrier material (14):
a) sputtering,
b) printing,
c) galvanic processes or
d) processes with etching technology.

32. The use of several thermoelements (6) connected in series behind each other without a separate heating but with a self-heating by the thermoelements (6) according to the Peltier effect for measuring a filling level (2) of a fluid (3), particularly for measuring the filling level (2) of a fuel (3) in a fuel tank (4) of a motor vehicle.

## Revendications

1. Capteur de niveau (1) destiné à mesurer le niveau (2) d'un fluide (3), en particulier pour détecter le niveau (2) d'un carburant (3) dans un réservoir à carburant (4) d'un véhicule automobile, comportant plusieurs thermocouples (6) avec des points de contact (7) chauds et des points de contact (8) froids, les thermocouples (6) étant montés en série les uns derrière les autres et formant une thermopile (5, 5a, 5b) allongée,
**caractérisé par** un chauffage intrinsèque des thermocouples au moyen des thermocouples conformément à l'effet Peltier, sachant que l'effet Peltier génère une différence de température entre les points de contact (7) chauds et les points de contact (8) froids, de telle sorte qu'il n'est prévu aucun chauffage séparé pour chauffer les thermocouples (6).

2. Capteur de niveau (1) selon la revendication 1, **caractérisé en ce que** les différents thermocouples (6) sont orientés chacun en formant sensiblement un angle droit ou un angle obtus avec l'axe longitudinal de la thermopile (5, 5a, 5b).

3. Capteur de niveau (1) selon l'une quelconque des revendications précédentes, **caractérisé en ce que** les thermocouples (6) forment plusieurs thermopiles (5a, 5b) allongées, qui sont montées en série les unes derrière les autres et sont disposées sensiblement parallèlement les unes à côté des autres.

4. Capteur de niveau (1) selon la revendication 2 ou 3, **caractérisé en ce que** les points de contact (7) chauds, d'une part, et les points de contact (8) froids, d'autre part, sont disposés sur des côtés opposés de la thermopile (5, 5a, 5b), respectivement en une rangée.

5. Capteur de niveau (1) selon les revendications 3 et 4, **caractérisé en ce que** dans les thermopiles (5a, 5b) adjacentes, soit les points de contact (7) chauds, soit les points de contact (8) froids sont orientés les uns vers les autres.

6. Capteur de niveau (1) selon l'une quelconque des revendications précédentes, **caractérisé en ce que** les différents thermocouples (6) comportent chacun deux matériaux conducteurs (9, 10), qui sont reliés l'un à l'autre au niveau d'un point de contact (7).

7. Capteur de niveau (1) selon la revendication 6, **caractérisé en ce que** les deux matériaux conducteurs (9, 10) des différents thermocouples (6) sont disposés respectivement sur le même côté d'un matériau support (14).

8. Capteur de niveau (1) selon la revendication 6, **caractérisé en ce que** les deux matériaux conducteurs (9, 10) des différents thermocouples (6) sont disposés respectivement sur des côtés opposés d'un matériau support (14) et sont reliés l'un à l'autre au niveau du point de contact par un trou d'interconnexion (15).

9. Capteur de niveau (1) selon l'une quelconque des revendications 6 à 8, **caractérisé en ce que** l'un des matériaux conducteurs (9) est un alliage de cuivre et nickel, en particulier le CuNi44.

10. Capteur de niveau (1) selon l'une quelconque des revendications 6 à 9, **caractérisé en ce que** l'autre matériau conducteur (10) est du cuivre, un alliage de cuivre, manganèse et nickel ou un alliage de nickel et chrome.

11. Capteur de niveau (1) selon l'une quelconque des revendications précédentes, **caractérisé en ce que** les thermocouples (6), à l'état alimenté en courant, chauffent les points de contact (7) chauds et refroidissent les points de contact (8) froids en fonction du courant électrique, alors que les thermocouples (6) à l'état non alimenté en courant génèrent une tension thermoélectrique (U) entre les points de contact (7) chauds et les points de contact (8) froids en fonction de la différence de température (ΔT) entre les points de contact (7) chauds et les points de contact (8) froids.

12. Capteur de niveau (1) selon l'une quelconque des revendications précédentes, **caractérisé en ce que** les thermocouples (6) sont disposés sur une feuille ou un tube à paroi mince formant un matériau support.

13. Dispositif de mesure du niveau avec un capteur de niveau (1) selon l'une quelconque des revendications précédentes.

14. Dispositif de mesure du niveau selon la revendication 13, **caractérisé par**
a) une source de courant (13, 16) raccordée au capteur de niveau (1) pour acheminer un courant à travers le capteur de niveau (1), et
b) un voltmètre (17) raccordé au capteur de niveau (1) et destiné à mesurer la tension électrique (U) générée par le capteur de niveau (1) à l'état non alimenté en courant.

15. Dispositif de mesure du niveau selon la revendication 14, **caractérisé en ce que** la source de courant (16) comporte un générateur d'impulsions, et le capteur de niveau (1) est commandé par des impulsions de courant.

16. Dispositif de mesure du niveau selon la revendication 14 ou 15, **caractérisé par** un intégrateur (18), raccordé au voltmètre (17), pour une intégration simple ou double de la tension mesurée.

17. Dispositif de mesure du niveau selon la revendication 13, **caractérisé par** un microcontrôleur (13), raccordé au capteur de niveau (1), pour la commande électrique du capteur de niveau (1) et pour la mesure de la tension électrique générée par le capteur de niveau (1).

18. Dispositif de mesure du niveau selon l'une quelconque des revendications 13 à 17, **caractérisé en ce que** le capteur de niveau (1) est disposé dans un réservoir à carburant (4) d'un véhicule automobile et mesure le niveau (2) du carburant (3) dans le réservoir à carburant (4).

19. Dispositif de mesure du niveau selon l'une quelconque des revendications 13 à 18, **caractérisé en ce que** la thermopile (5) ou les thermopiles (5a, 5b) sont orientées en formant un angle obtus, en particulier sensiblement un angle droit, avec le niveau du fluide à mesurer.

20. Dispositif de mesure du niveau selon l'une quelconque des revendications 13 à 19, **caractérisé en ce que** les différents thermocouples (6) sont orientés chacun sensiblement parallèlement au niveau du fluide à mesurer ou en formant un angle aigu avec ledit niveau de fluide.

21. Procédé de fonctionnement d'un capteur de niveau (1), en particulier selon l'une quelconque des revendications 1 à 12, **caractérisé en ce que** les thermocouples (6) ne sont pas chauffés par un chauffage séparé, mais par un chauffage intrinsèque au moyen des thermocouples (6) conformément à l'effet Peltier, sachant que l'effet Peltier génère une différence de température entre les points de contact (7) chauds et les points de contact (8) froids.

22. Procédé de fonctionnement selon la revendication 21, **caractérisé par** les étapes suivantes :
a) alimentation en courant des thermocouples (6) pour générer une différence de température (ΔT) entre les différents thermocouples (6),
b) mesure de la tension électrique (U) générée par le capteur de niveau (1), et
c) détermination du niveau (2) à partir de la tension (U) mesurée.

23. Procédé de fonctionnement selon la revendication 21 ou 22, **caractérisé en ce que** le capteur de niveau (1) est alimenté par des impulsions de courant.

24. Procédé de fonctionnement selon l'une quelconque des revendications 21 à 23, **caractérisé en ce que** la mesure de la tension est effectuée à l'état non alimenté en courant, après l'alimentation en courant du capteur de niveau (1).

25. Procédé de fonctionnement selon l'une quelconque des revendications 21 à 24, **caractérisé par** l'étape suivante : intégration simple ou double de la tension mesurée.

26. Procédé de fonctionnement selon l'une quelconque des revendications 21 à 24, **caractérisé en ce que** le capteur de niveau (1) est commandé et mesuré par un microcontrôleur (13).

27. Procédé de fabrication d'un capteur de niveau (1), comportant les étapes suivantes :
a) pose de plusieurs thermocouples (6) sur un matériau support (14), de telle sorte que les thermocouples (6) forment une thermopile (5, 5a, 5b) allongée,
b) liaison électrique des thermocouples (6) pour former un montage en série des différents thermocouples (6),
**caractérisé en ce qu'**aucun chauffage séparé n'est appliqué sur le matériau support (14).

28. Procédé de fabrication selon la revendication 27, **caractérisé en ce que** les différents thermocouples (6) comportent chacun deux matériaux conducteurs (9, 10), qui sont reliés l'un à l'autre au niveau d'un point de contact (7, 8).

29. Procédé de fabrication selon la revendication 28, **caractérisé en ce que** les deux matériaux conducteurs (9, 10) sont disposés sur le même côté du matériau support (14).

30. Procédé de fabrication selon la revendication 28, **caractérisé en ce que** les deux matériaux conducteurs (9, 10) sont disposés sur des côtés opposés du matériau support (14), un trou d'interconnexion (15) étant réalisé dans le matériau support (14) au niveau du point de contact et traversant de part en part le matériau support (14).

31. Procédé de fabrication selon l'une quelconque des revendications 27 à 29, **caractérisé en ce que** les matériaux conducteurs (9, 10) des thermocouples (6) sont déposés sur le matériau support (14) par l'un des procédés suivants :
a) pulvérisation cathodique,
b) impression,
c) procédé de dépôt électrolytique ou
d) procédé de gravure.

32. Utilisation de plusieurs thermocouples (6), montés en série les uns derrière les autres, sans chauffage séparé, mais avec un chauffage intrinsèque au moyen des thermocouples (6) conformément à l'effet Peltier, pour mesurer le niveau (2) d'un fluide (3), en particulier pour mesurer le niveau (2) d'un carburant (3) dans un réservoir à carburant (4) d'un véhicule automobile.
